# EUROPÄISCHE PATENTSCHRIFT

(11) **EP 3 440 391 B1**
(45) Veröffentlichungstag und Bekanntmachung des Hinweises auf die Patenterteilung: **30.12.2020**
(21) Anmeldenummer: 17723251.9
(22) Anmeldetag: 06.04.2017
(51) Int. Cl.: F16L 55/40

(54) **VORRICHTUNG ZUM AUSHÄRTEN EINES AUSKLEIDUNGSSCHLAUCHS UMFASSEND EINE KAMERAEINRICHTUNG**
DEVICE FOR CURING A LINING SLEEVE COMPRISING A CAMERA DEVICE
DISPOSITIF POUR DURCIR UN REVÊTEMENT INTÉRIEUR TUBULAIRE, DOTÉ D'UN DISPOSITIF CAMÉRA

(30) Priorität: 08.04.2016 DE 102016106497
(43) Veröffentlichungstag der Anmeldung: 13.02.2019
(73) Patentinhaber: RelineEurope AG, 76865 Rohrbach (DE)
(72) Erfinder: WIND, Herbert, 76857 Albersweiler (DE); NOLL, Christian, 67117 Limburgerhof (DE)
(74) Vertreter: Dr. Langfinger & Partner
(86) Internationale Anmeldenummer: PCT/DE2017/100277
(87) Internationale Veröffentlichungsnummer: WO 2017/174079

(56) Entgegenhaltungen:
- EP-A1- 0 391 046
- EP-A1- 2 256 396
- WO-A1-2007/079542
- DE-U1-202011 003 792
- US-A- 5 915 419

## Beschreibung

Die vorliegende Erfindung betrifft eine Vorrichtung zum Aushärten eines Auskleidungsschlauchs umfassend eine Kameraeinrichtung.

Verfahren zur Sanierung von Leitungssystemen, in denen zum Beispiel flüssige oder gasförmige Medien transportiert werden, sind im Stand der Technik bekannt und vielfach beschrieben.

Beispielsweise sind Verfahren bekannt, bei denen die einen Defekt oder eine Beschädigung aufweisenden Abschnitte des Leitungssystems durch neue Abschnitte ersetzt werden. Dies ist jedoch aufwendig und auch nicht immer möglich.

Des weiteren sind Verfahren im Stand der Technik bekannt, bei denen zur Sanierung von Leitungssystemen, z.B. von Kanälen und ähnlichen Rohrsystemen, eine flexibler, mit einer mit härtbaren Harz getränkte aushärtbare Lage, die als Auskleidungsschlauch, auch als Liner bezeichnet, dient, in das Leitungssystem eingeführt wird. Nach dem Einführen wird der Auskleidungsschlauch aufgeweitet, so dass er sich eng an die Innenwand des Leitungssystems anschmiegt. Anschließend wird das Harz ausgehärtet.

Die Herstellung eines derartigen Auskleidungsschlauches ist beispielsweise in der WO 95/04646 beschrieben. Ein solcher Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie eine mit einem Harz getränkte aushärtbare Lage auf, die zwischen der Innenfolie und der Außenfolie angeordnet ist.

Der Aussenfolienschlauch soll verhindern, dass das zur Imprägnierung verwendete Harz aus der aushärtbaren Lage austritt und in die Umwelt gelangt. Dies setzt eine gute Dichtigkeit und Anbindung des äußeren Folienschlauchs an die harzgetränkte aushärtbare Lage voraus.

Aus der WO 00/73692 A1 ist ein Auskleidungsschlauch bekannt umfassend einen Innenfolienschlauch, ein mit einem Harz getränktes Faserband als aushärtbare Lage und einen Außenschlauch, der an seiner Innenseite mit einem Faservlies kaschiert ist.

Oftmals wird das harzgestränkte Faserband auf den Innenschlauch eines Auskleidungsschlauchs zu dessen Herstellung schraubenförmig und überlappend aufgewickelt. Der Außenschlauch wird anschließend ebenfalls schraubenförmig und überlappend um das harzgetränkte Faserband gewickelt. Als härtbare Harze werden im Stand der Technik ungesättigte Polyesterharze oder Vinylesterharze verwendet, die beispielsweise in Styrol und/oder einem Acrylester gelöst sein können. Diese ungesättigten Polyester- oder Vinylester können thermisch (üblicherweise durch Peroxidkatalysatoren) oder mittels Strahlung, z.B. durch UV-Licht mit Photoinitiatoren, wie beispielsweise in der EP-A 23623 beschrieben, ausgehärtet werden. Auch so genannte Kombinationshärtungen mit einem für die thermische Härtung verwendeten Peroxidinitiator in Kombination mit Photoinitiatoren sind möglich und haben sich insbesondere bei großen Wandstärken der Auskleidungsschläuche als vorteilhaft erwiesen. Ein Verfahren für eine derartige sogenannte Kombinationshärtung ist beispielsweise in der EP-A 1262708 beschrieben. Ungesättigte Polyesteroder Vinylesterharze unterliegen bei der Härtung einem Schwund, was die Stabilität des sanierten Leitungssystems im späteren Betrieb beeinträchtigen kann.

Der Innenschlauch selber wird dabei zur vereinfachten Herstellung auch um einen Wickeldorn gewickelt. Alternativ offenbart beispielsweise WO 95/04646 das ein vorgefertigter Innenfolienschlauch aufgeblasen werden und selbst als Wickeldorn dienen kann. Ein solcher vorgefertigter Innenfolienschlauch wird dabei aus einem Folienband hergestellt, dessen Folienränder miteinander durch Schweißen oder Kleben miteinander verbunden werden, um den Innenfolienschlauch zu bilden.

Die Auskleidungsschläuche werden vor dem Aushärten in die zu sanierenden Leitungssystem eingeführt und mittels eines Fluids, i.d.R. Druckluft, aufgeblasen. Für ein Aufblasen des Auskleidungsschlauchs wird ein Öffnungsende des Auskleidungsschlauchs gemäß dem Stand der Technik mit Druckluft beaufschlagt und das gegenüberliegende Öffnungsende des Auskleidungsschlauchs mit einem Verschlussvorrichtung, einem sogenannten Packer, verschlossen. Diese Verschlussvorrichtung umfasst dabei einen Hohlzylinder und ein Abdeckelement, mit welchem der Hohlzylinder verschlossen werden kann.

In den Auskleidungsschlauch wird zum Aushärten desselben eine Aushärtevorrichtung eingeführt, die eine Strahlungsquelle aufweist, und die durch den Aushärtungsschlauch geführt wird, um mit der Strahlungsenergie die Aushärtung der aushärtbaren Lagen des Auskleidungsschlauchs zu aktivieren bzw. vorzunehmen.

Die aus dem Stand der Technik bekannten Aushärtevorrichtungen weisen dabei den Nachteil auf, dass keine ausreichende visuelle Überwachung des Aushärtevorgangs selbst möglich ist. Eine visuelle Inspektion mittels Kameras erfolgt im Vorfeld durch sogenannten Inspektionsfahrten. Zwar sind Kamerasysteme, in Kombination mit einer Aushärtevorrichtung oder einer Arbeitsvorrichtung bekannt, jedoch kann beispielweise lediglich der Zoom der Kamera verändert werden, wie in WO2007/79542 und DE202011003792 oder die Kameraposition nur vertikal, wie in US5915419A sowie nur durch Rotation wie, beispielweise in EP0391046A1, verändert werden. Gemäß Stand der Technik sind zudem Vorrichtungen bekannt, bei welchen zur Veränderung der Kameraposition die ganze Vorrichtung bewegt werden muss wie beispielsweise bei EP2256 396A1. Diese ermöglichen jedoch kein genaues Betrachten und Überwachen des Aushärtevorgangs in seitlichen oder oberen bzw. unteren Bereichen.

Ein fehlerhaftes Aushärten führt jedoch zu hohen Kosten und einem großen zeitlichen Verzug, da ggf. der bereits größtenteils ausgehärtete Auskleidungsschlauch vollständig aus der zu sanierenden Leitung entfernt werden muss, und der Sanierungsvorgang erneut nachfolgend durchgeführt werden muss.

Demzufolge lag der vorliegenden Erfindung die Aufgabe zugrunde, die Nachteile des Stands der Technik zu überwinden, und insbesondere eine Vorrichtung zu liefern, die ein visuelles Überwachen und ein Aushärten in Einem ermöglicht.

Diese Aufgabe wird insbesondere gelöst durch eine Vorrichtung nach Anspruch 1

Erfindungsgemäß hat es sich als vorteilhaft erwiesen, dass eine Vorrichtung zum Aushärten eines Auskleidungsschlauchs nicht eine Kamera mit einem festen Erfassungsbereich bzw. Anzeigebereich aufweist, sondern dieser von einem Benutzer einstellbar ist. Ein solches Einstellen kann durch ein mechanisches Bewegen der Kamera oder eines Teils der Kamera, insbesondere zumindest des Objektivs, erfolgen, oder durch ein Einstellen eines Anzeigebereichs. Bei den von der Erfindung umfassten Kamerasystemen soll es sich dabei insbesondere um digitale Kameras handeln.

Unter einem Erfassungsbereich der Kamera soll erfindungsgemäß bevorzugt der komplette vom Bildsensor einer Kamera aufgenommene Bereich verstanden werden. Unter einem Anzeigebereich soll erfindungsgemäß bevorzugt ein Auslesen eines Teilbereichs eines Bildsensors einer Kamera verstanden werden, der einem Benutzer angezeigt wird. Ein Anzeigebereich ist in diesem Fall also ein angezeigter Ausschnitts des Erfassungsbereichs.

Gemäß dem Stand der Technik werden bei Aushärtevorrichtungen Kameras mit einem starren und nicht veränderbaren Erfassungs- oder Anzeigebereich eingesetzt. Dies führt dazu, dass ein Benutzer Elemente im Randbereich oder außerhalb diese starren Erfassungs- oder Anzeigebereichs nicht genauer oder überhaupt nicht betrachten kann. Zudem treten perspektivische und farbliche Verzerrungen auf, die sich ausgehend vom Mittelpunkt des verwendeten Objektivs verstärken.

Mittels der erfindungsgemäßen Vorrichtung wird es nun einem Benutzer ermöglicht, ihn interessierende Abschnitte und Elemente, die vorher nicht erkennbar waren, auszuwählen und sich während des Aushärtens anzeigen zu lassen. Hierfür kann der Benutzer mittels einer Eingabeeinrichtung, beispielsweise in Form von Tasten, einem Joystick, und dergleichen, eine Eingabe vornehmen und den gewünschten anzuzeigenden Bereich auswählen.

Dies kann erfindungsgemäß, wie ausgeführt, durch ein mechanisches Verschwenken der Kamera oder eines Teils der Kamera erfolgen. Alternativ kann auch eine sogenannte "Region of interest" (ROI) bzw. ein "Bereich von Interesse" gewählt werden. Durch eine ROI kann dabei nicht nur die Größe des Bildausschnitts festlegt werden (und damit die Auflösung), sondern auch deren Lage. Dadurch verringert sich die Menge der Bilddaten. Die Bilder können also auch schneller übertragen werden. Dabei ist zu beachten, dass ein Auswählen eines Bildausschnitts nicht nur zu einer Verringerung der Auflösung, sondern gleichzeitig auch zu einem kleineren Format des angezeigten Bildes führt. Dieses wiederum beeinflusst die Berechnung der Brennweite des Objektivs und soll erfindungsgemäß berücksichtigt werden. Verfahren zur Berechnung einer Brennweite eines Objektivs beim Auswählen einer ROI zum Sicherstellen einer geeigneten Auflösung sind dem Fachmann aus dem Stand der Technik bekannt.

Es hat sich im Rahmen der vorliegenden Erfindung gezeigt, dass ein analoges und eine digitales Verschwenken eines Erfassungsbereichs bzw. eine Aufnahmebereichs zur Visualisierung von Leitungssystemen bei der Aushärtung von Auskleidungsschläuchen vorteilhaft ist, um den Aushärtevorgang zu überwachen und optional durch Eingriffe in Reaktion auf die angezeigten Bilder zu optimieren.

Unter Leitungssystemen im Sinne der vorliegenden Erfindung sollen Leitungssysteme jeglicher Art zum Transport von flüssigen oder gasförmigen Medien verstanden werden, die bei Unterdruck, Normaldruck oder Überdruck betrieben werden können. Beispielhaft seien hier Pipelines jeglicher Art, Rohrleitungssysteme zum Transport von Medien in chemischen Betrieben und Produktionsanlagen, Druckleitungen wie Druckwasserrohre und Trinkwasserrohre und insbesondere auch Abwassersysteme genannt, die unterirdisch bzw. nicht sichtbar verlegt sind. Die Verwendung der erfindungsgemäßen Leuchtmittel für ein Aushärten von Auskleidungsschläuchen eignet sich insbesondere auch für die Sanierung solcher Abwasserleitungen in Kanalsystemen.

Gemäß einem Ausführungsbeispiel der vorliegenden Erfindung hat es sich als vorteilhaft erwiesen, dass der mindestens eine Kameraparameter einen auszulesenden Teilbereich des Bildsensors der Kamera umfasst.

Problematisch bei sehr hochauflösenden Kameras mit einem sehr großen Bildwinkel ist, dass die daraus resultierenden Datenmenge nur aufwendig fehlerfrei übertragbar ist. Dieses Problem tritt insbesondere während Aushärtungsvorgängen in Auskleidungsschläuchen auf, da aufgrund der Strahlungsenergie der Strahlungsquellen Einkoppelungen in die Datenleitungen vorliegen. Zudem steigt der Rechenaufwand in der digitalen Bildverarbeitungseinrichtung bei einer vollständigen Auswertung hochauflösender Kameras stark an. Zudem wird für die Darstellung des besagten Weitwinkelbildes eine große Anzeigeeinrichtung benötigt, da ansonsten ein Benutzer die gewünschten Bereiche nicht genau untersuchen kann und diese nur sehr klein dargestellt werden.

Eine Weitwinkelkamera mit einer hohen Auflösung ist bei Übertragung der vollumfänglichen Bildinformationen somit mit erheblichen Nachteiligen verbunden. Diese Nachteile werden jedoch durch das Einstellen des erfindungsgemäßen Anzeigebereichs als ROI überwunden, in dem als Parameter ein auszulesender Teilbereich der Kamera festgelegt oder festlegbar ist. Dies reduziert die zu übertragende und auszuwertende Datenmenge und ermöglicht eine gute grafische Darstellung des gewählten Bereichs auf einer Anzeigeeinrichtung. Nachträglich Bildverarbeitungsverfahren wie ein digitaler Zoom, etc. sind offensichtlich als zusätzlich vorteilhafte Ausgestaltungen möglich, um bestimmte Anzeigebereich noch besser kenntlich zu machen.

Das erfindungsgemäße digitale Verschwenken hat sich dabei als besonders vorteilhaft erwiesen und kann zusätzlich oder anstelle eines mechanischen Verschwenkens der Kamera erfolgen.

Es kann dabei insbesondere vorteilhaft sein, dass die Kamera ein Weitwinkelobjektiv mit einem diagonalen Bildwinkel zwischen 60° und 270°, insbesondere zwischen 60° und 180° umfasst, insbesondere ein Fischaugenobjektiv.

Die besagten Bildwinkel haben sich als besonders vorteilhaft erwiesen, um einen möglichst großen Erfassungsbereich einer Kamera sicherzustellen. Dies kann zum Einen ein Verschwenken der Kamera überflüssig werden lassen oder die Bewegungswege reduzieren und/oder die Anzahl der benötigten Einzelkameras eines Kamerasystems reduzieren.

Es kann erfindungsgemäß bevorzugt sein, dass die mindestens eine Kamera einen um eine erste Achse drehbaren und um eine zweite Achse verschwenkbaren Schwenkkopf umfasst, wobei für eine Positionsänderung des Erfassungsbereichs der Kamera insbesondere mit dem Schwenkkopf in Wirkverbindung stehende Elektromotoren umfasst sind.

Durch eine solche Drehung der Kamera in einer ersten Achse, beispielsweise von Oben nach Unten in einer Vertikalen oder von Rechts nach Links in einer Horizontalen mit einer zweiten Schwenkachse kann ein großer variabler Erfassungsbereich der Kamera sichergestellt werden, den der Benutzer für Anzeige ausgewählter Bereiche eines Leitungssystems verwenden kann.

Dabei kann es gemäß einer Ausführungsform der vorliegenden Erfindung vorteilhaft sein, dass der Schwenkkopf und/oder die Elektromotoren in einem thermisch isolierten Gehäuse angeordnet sind, insbesondere in einem Gehäuse umfassend mindestens eine Wandung umfassend mindestens eine erste thermisch isolierende Schicht und mindestens eine zweite thermisch isolierende Schicht, wobei zwischen der ersten und der zweiten Schicht ein Vakuum ausgebildet oder ausbildbar ist.

Bei einem Aushärtevorgang eines Auskleidungsschlauchs entstehen durch die von der Strahlungsquelle abgegebene Strahlungsenergie hohe Temperaturen, die die Zuverlässigkeit der für ein mechanisches Verschwenken der Kamera notwendigen Elektromotoren stark negativ beeinflussen. Bei Inspektionsfahrten mit Inspektionsvorrichtungen treten solche hohen Temperaturen nicht auf, so dass der Erfindung die überraschende Erkenntnis zugrunde lag, dass eine thermische Isolierung des Schwenkkopfes und/oder der Elektromotoren die Zuverlässigkeit und die Lebensdauer signifikant erhöht und deren Einsatz in einer Aushärtungsvorrichtung möglich werden lässt.

Als besonders vorteilhaft hat sich dabei eine doppelwandige Ausgestaltung des Gehäuses erwiesen, welches zwischen den Wandungen eine Vakuum ausbildet. Hierdurch kann eine optimale thermische Isolierung bereitgestellt werden. Es ist dabei für den Fachmann offensichtlich, dass auch andere isolierende Ausgestaltungen möglich sind und die vorliegende Erfindung nicht auf die beschriebene doppelwandige Gehäuseausgestaltung beschränkt ist.

Auch kann es gemäß einer Ausführungsform vorgesehen sein, dass die mindestens eine Kamera insbesondere am oder im Bereich des vorderen Endes und/oder am oder im Bereich des rückseitigen Endes der Vorrichtung angeordnet ist.

Eine Anordnung am vorderen oder rückseitigen Ende der Vorrichtung hat sich zur Visualisierung des Aushärtevorgangs als besonders vorteilhaft erwiesen, um den noch nicht ausgehärteten Auskleidungsschlauch vor dem Aushärten und/oder den ausgehärteten Auskleidungsschlauchs betrachten zu können. Der Begriff vorderseitiges und rückseitiges Ende dient dabei ausschließlich dem einfacheren Verständnis der vorliegenden Erfindung und soll Endpunkte der Vorrichtung in Längsrichtung festlegen. Das Merkmal im Bereich des vorderen oder rückseitigen Endes soll eine Anordnung einer Kamera mit einem Abstand in einem Bereich von bis zu 20%, vorzugsweise von 15%, besonders bevorzugt von bis zu 10% vom vorderen oder rückseitigen Ende bezogen auf die Länge der Vorrichtung gemessen vom vorderseitigen zum rückseitigen Ende definieren.

Es kann dabei selbstverständlich auch vorgesehen sein, dass eine Kamera ausschließlich oder zusätzlich am oberen und/oder unteren Ende oder im Bereich des oberen und/oder des unteren Endes angeordnet ist.

Des weiteren kann es bevorzugt sein, dass mindestens zwei Kameras umfasst sind, deren Erfassungsbereiche nicht oder ausschließlich teilweise überlappend zueinander angeordnet sind, und deren erfasste Informationen von der elektronischen Bildverarbeitungseinrichtung gemeinsam ausgewertete werden.

Anstelle der Verwendung nur einer besonders hoch auflösenden Kamera mit einem sehr großen Bildwinkel kann es vorgesehen sein, dass mehrere Kameras zusammen ein Kamerasystem ausbilden. Ein solches Kamerasystem wird vorliegend gleichsam als Kamera bezeichnet. Die Verwendung mehrere Kameras, deren Erfassungsbereiche sich nicht oder nur teilweise überlappen, und deren erfasste Informationen gemeinsam von der elektronischen Bildverarbeitungseinrichtung ausgewertete werden, können mit mehreren Vorteilen einhergehen. Zum Einen können solche Kameras kostengünstiger sein als die Verwendung nur einer Kamera, da auf geläufige Kameras zurückgegriffen werden kann. Des weiteren kann ein höherer Bildwinkel bei gleichzeitig geringeren Verzerrungen erreicht werden, da die einzelnen erfassten Bildausschnitte erst nachfolgend digital zusammengesetzt werden. Auch kann es vorteilhaft sein, dass die Zuverlässigkeit des Gesamtsystems erhöht wird, da ein Ausfall einer Kamera weiterhin ermöglicht, zumindest Teilbereiche eines Leitungssystems weiterhin zu erfassen und somit die Aushärtung zumindest in Teilen zu überwachen.

Auch kann es dabei bevorzugt sein, dass die elektronische Bildverarbeitungseinrichtung den eingestellten Anzeigebereich basierend auf den erfassten Informationen sämtlicher Kameras berechnet und anzeigt.

Eine solche Berücksichtigung von Informationen sämtlicher Kameras führt dazu, dass der darstellte Anzeigebereich der von Benutzer gewünscht eingestellt ist auch aus zwei oder mehr Teilbildern separater Kameras mittels der elektronischen Bildverarbeitungseinrichtung berechnet werden kann.

Gemäß einer Ausführungsform der vorliegenden Erfindung kann es vorgesehen sein, dass die von den Bildverarbeitungseinrichtung ausgelesenen digitalisierten Daten einer digitalen Korrektur unterzogen werden, insbesondere einer Entzerrung.

Viele Objektive zeigen eine kissen- oder tonnenförmige Verzeichnung. Gerade Linien werden dabei, wenn diese nicht durch den Bildmittelpunkt laufen, nicht als Geraden abgebildet. Bei komplexen Optiken mit vielen Linsen können auch "wellenförmige" Verzeichnungen auftreten. Bestimmender Faktor ist dabei die radiale Verzeichnung, die aus der Bauform der Linse resultiert und mit wachsender Brennweite zunimmt. Ein weiterer Faktor ist die tangentiale Verzeichnung, die auch als dezentrierende Verzeichnung bezeichnet wird. Sie resultiert daraus, dass Objektiv und CCD-Chip aber auch die einzelnen optischen und mechanischen Bestandteile eines Objektivs nicht perfekt zueinander ausgerichtet sind.

Besonders bei Objektiven mit einer großen Bildwinkel und insbesondere bei Fischaugenobjektiv ist es vorteilhaft, wenn diese Verzeichnungen bzw. Verzerrungen mittels elektronischer Bildverarbeitung korrigiert werden. Bei der Korrektur mittels elektronischer Bildbearbeitung macht man sich zu Nutze, dass das Ausmaß der Verzeichnung zumeist von der Entfernung vom Bildmittelpunkt abhängt. Für einen derartigen Fall kann das Bild durch Polarkoordinaten beschrieben werden. Die Lage der Bildpunkte wird dabei durch die Entfernung vom Bildmittelpunkt und einen Winkel z. B. von der Horizontalen dargestellt. Die anzuwendende Korrektur hängt von der Entfernung vom Bildmittelpunkt ab und kann als mathematische Funktion beschrieben werden.

Die erfindungsgemäße elektronische Bildverarbeitungseinrichtung kann die besagten Verzeichnung mit einer entgegengerichteten Verzerrung des Bildes korrigieren. Dabei wird berechnet, welches Pixel jeweils dem unverzerrten Pixel entspricht, was aufgrund der Nichtlinearität der Gleichung sehr aufwendig ist. Laterale chromatische Aberration kann durch solches Image Warping, für Rot-, Grün- und Blaukanal getrennt, deutlich reduziert werden. Auch sind alternative Korrekturverfahren im Stand der Technik bekannt und haben sich als gleichsam vorteilhaft erwiesen, wie z.B. eine Berechnung unverzerrter Bildpunkte durch Iteration. [

Schließlich kann vorgesehen sein, dass die Vorrichtung mit einer Anzeigeeinrichtung in Wirkverbindung steht oder bringbar ist, wobei auf der Anzeigeeinrichtung der Erfassungsbereich und/oder der Anzeigebereich der Kamera angezeigt oder anzeigbar ist.

Für die Aushärtung von Auskleidungsschläuchen ist es üblich, dass dieselbe von außerhalb der eigentlichen Leitung von einem Benutzer gesteuert wird. Hierzu werden einerseits die Steuersignale von einem Bedienelement zu der Vorrichtung übertragen und andererseits die erfassten Kamerainformationen an eine Anzeigeeinrichtung übertragen, so dass der Benutzer für die Steuerung auf die Kamerainformationen zurückgreifen kann.

Erfindungsgemäß kann gemäß einer Ausführungsform der vorliegenden Erfindung vorteilhaft sein, dass als Strahlungsquelle eine Gasentladungslampe, eine Kurzbogenlampe, eine Stroboskoplampe, eine Blitzlampe, eine Bogenlampe, insbesondere eine Xenon-Lampe, und/oder einer Quecksilber-Xenon-Lampe von der Vorrichtung umfasst ist.

Die Auskleidungsschläuche weisen in der Regel als aushärtbare und/oder aushärtende Lage ein oder mehrere Faserbänder auf, die mit einem härtbaren Harz getränkt sind. Als Faserbänder eignen sich dabei grundsätzlich alle dem Fachmann bekannten Produkte in Form von Geweben, Gewirken, Gelegen, Matten oder Vliesen, die Fasern in Form von langen Endlosfasern oder kurzen Fasern enthalten können. Entsprechende Produkte sind dem Fachmann an sich bekannt und in großer Vielfalt von verschiedenen Herstellern kommerziell erhältlich. Solche Auskleidungsschläuche lassen sich mit erfindungsgemäßen Strahlungsquellen optimal aushärten.

Im Rahmen der vorliegenden Erfindung sollen als Faserbänder im Sinne der Erfindung auch Filze verstanden werden. Ein Filz ist ein Flächengebilde aus einem ungeordneten, nur schwer zu trennendem Fasergut. Prinzipiell sind Filze damit nicht gewebte Textilien. Aus Chemiefasern und Pflanzenfasern werden Filze in der Regel durch trockene Vernadelung (sog. Nadelfilze) oder durch Verfestigung mit unter hohem Druck aus einem Düsenbalken austretenden Wasserstrahlen hergestellt. Die einzelnen Fasern im Filz sind ungeordnet miteinander verschlungen. Filze weisen eine gute Temperaturbeständigkeit auf und sind in der Regel feuchtigkeitsabweisend, was bei der Anwendung in flüssigkeitsführenden Systemen von Vorteil sein kann.

Die Länge der verwendeten Fasern unterliegt keiner besonderen Beschränkung, d.h. es können sowohl so genannte Langfasern als auch Kurzfasern oder Faserbruchstücke verwendet werden. Über die Länge der verwendeten Fasern lassen sich die Eigenschaften der entsprechenden Faserbänder auch über weite Bereiche einstellen und steuern.

Auch die Art der verwendeten Fasern unterliegt keiner Beschränkung. Nur beispielhaft seien hier Glasfasern, Carbonfasern oder Kunststofffasern wie Aramidfasern oder Fasern aus thermoplastischen Kunststoffen wie Polyestern oder Polyamiden oder Polyolefinen (z.B. Polypropylen) genannt, die dem Fachmann mit ihren Eigenschaften bekannt und in großer Vielzahl kommerziell erhältlich sind. Aus wirtschaftlichen Gründen werden in der Regel Glasfasern bevorzugt; ist jedoch beispielsweise eine besondere Hitzebeständigkeit von Bedeutung, können beispielsweise Aramidfasern oder Carbonfasern eingesetzt werden, die hinsichtlich der Festigkeit bei höheren Temperaturen Vorteile gegenüber Glasfasern bieten können.

Die Auskleidungsschläuche können ein oder mehrere Faserbänder enthalten, die zudem gleich oder unterschiedlich sein können.

Schließlich liefert die Erfindung eine Verwendung einer erfindungsgemäßen Vorrichtung in einem Auskleidungsschlauch und/oder als Aushärtevorrichtung für Auskleidungsschläuche, insbesondere zum Aushärten des Auskleidungsschlauchs, vorzugsweise zum Aushärten der aushärtbaren Lage des Auskleidungsschlauchs.

Der vorliegenden Erfindung liegt somit die überraschende Erkenntnis zugrunde, dass eine Überwachung eines Aushärtevorgangs eines Auskleidungsschlauchs durch einen Benutzer wesentlich verbessert werden kann, wenn nicht auf eine stationäre Kamera zurückgegriffen wird, sondern der Benutzer einen gewünschten Erfassungsbereich bzw. Anzeigebereich analog oder digital einstellen kann. Dabei kann es sowohl vorgesehen sein, dass ein einzelnen Kamera zum Einsatz kommt, es kann jedoch gemäß einigen Ausführungsformen ebenfalls vorteilhaft sein, dass mehrere einzelne Kameras zu einem Kamerasystem, welches hier auch als Kamera bezeichnet ist, zusammengefasst sind und gemeinsam von der elektronischen Bildverarbeitungseinrichtung ausgewertet werden.

Durch die erfindungsgemäße Vorrichtung wird es nunmehr erstmalig möglich, dass ein Benutzer beliebige Ausschnitte eines Auskleidungsschlauchs während dem Aushärten einstellen und sich anzeigen lassen kann, um einen Aushärtevorgang zu überwachen, in dem der Erfassungsbereich bzw. Anzeigebereich digital oder analog verschwenkbar ausgebildet ist.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung zur Aushärtung von harzgetränkten Auskleidungsschläuchen mit energiereicher Strahlung, umfassend mindestens eine Strahlungsquelle zur Erzeugung energiereicher Strahlung zum Aushärten eines Auskleidungsschlauchs, mindestens eine Kamera zum Erfassen einer Bildsequenz einer Umgebung der Vorrichtung und mindestens eine, insbesondere getrennt von der Vorrichtung vorliegende, Eingabeeinrichtung, wobei mittels der Eingabeeinrichtung ein Erfassungsbereich und/oder ein Anzeigebereich der Kamera durch einen Benutzer einstellbar oder eingestellt ist, und wobei ein Einstellen des Erfassungsbereichs der Kamera durch ein Bewegen mindestens eines Teils der Kamera erfolgt und/oder mittels einer elektronischen Bildverarbeitungseinrichtung, die ausgelegt und einrichtet ist, um in Abhängigkeit eines eingestellten Anzeigebereichs zumindest einen Kameraparameter einzustellen, erfolgt, und wobei
die mindestens eine Kamera einen um eine erste Achse drehbaren und um eine zweite Achse verschwenkbaren Schwenkkopf umfasst, wobei für eine Positionsänderung des Erfassungsbereichs der Kamera insbesondere mit dem Schwenkkopf in Wirkverbindung stehende Elektromotoren umfasst sind.

2. Vorrichtung nach Anspruch 1, **dadurch gekennzeichnet, dass**
der mindestens eine Kameraparameter einen auszulesenden Teilbereich des Bildsensors der Kamera umfasst.

3. Vorrichtung nach Anspruch 1 oder Anspruch 2, **dadurch gekennzeichnet, dass** die Kamera ein Weitwinkelobjektiv mit einem diagonalen Bildwinkel zwischen 60° und 270°, insbesondere zwischen 60° und 180° umfasst, insbesondere ein Fischaugenobjektiv.

4. Vorrichtung nach einem der vorangehenden Ansprüche, **dadurch gekennzeichnet, dass** der Schwenkkopf und/oder die Elektromotoren in einem thermisch isolierten Gehäuse angeordnet sind, insbesondere in einem Gehäuse umfassend mindestens eine Wandung umfassend mindestens eine erste thermisch isolierende Schicht und mindestens eine zweite thermisch isolierende Schicht, wobei zwischen der ersten und der zweiten Schicht ein Vakuum ausgebildet oder ausbildbar ist.

5. Vorrichtung nach einem der vorangehenden Ansprüche, **dadurch gekennzeichnet, dass** die mindestens eine Kamera insbesondere am oder im Bereich des vorderen Endes und/oder am oder im Bereich des rückseitigen Endes der Vorrichtung angeordnet ist.

6. Vorrichtung nach einem der vorangehenden Ansprüche, **dadurch gekennzeichnet, dass** mindestens zwei Kameras umfasst sind, deren Erfassungsbereiche nicht oder ausschließlich teilweise überlappend zueinander angeordnet sind, und deren erfasste Informationen von der elektronischen Bildverarbeitungseinrichtung gemeinsam ausgewertete werden.

7. Vorrichtung nach Anspruch 6, **dadurch gekennzeichnet, dass**
die elektronische Bildverarbeitungseinrichtung den eingestellten Anzeigebereich basierend auf den erfassten Informationen sämtlicher Kameras berechnet und anzeigt.

8. Vorrichtung nach einem der vorangehenden Ansprüche, **dadurch gekennzeichnet, dass** die von den Bildverarbeitungseinrichtung ausgelesenen digitalisierten Daten einer digitalen Korrektur unterzogen werden, insbesondere einer Entzerrung.

9. Vorrichtung nach einem der vorangehenden Ansprüche, **dadurch gekennzeichnet, dass** die Vorrichtung mit einer Anzeigeeinrichtung in Wirkverbindung steht oder bring bar ist, wobei auf der Anzeigeeinrichtung der Erfassungsbereich und/oder der Anzeigebereich der Kamera angezeigt oder anzeigbar ist.

10. Verwendung einer Vorrichtung nach einem der vorangehenden Ansprüche in einem Auskleidungsschlauch und/oder als Aushärtevorrichtung für Auskleidungsschläuche, insbesondere zum Aushärten des Auskleidungsschlauchs, vorzugsweise zum Aushärten der aushärtbaren Lage des Auskleidungsschlauchs.

## Claims

1. Device for curing resin-impregnated lining sleeves with high-energy radiation, comprising at least one radiation source for generating high-energy radiation for curing a lining sleeve, at least one camera for capturing a sequence of images of the surrounding area of the device and at least one input device, in particular separate from the curing device, wherein by means of the input device a capturing region and/or a display region of the camera can be set, or is set, by a user, and wherein setting of the capturing region of the camera is performed by moving at least part of the camera and/or is performed by means of an electronic image processing device, which is designed and set up to set at least one camera parameter in dependence on a set display region, and wherein
the at least one camera comprises a swivel head that is rotatable about a first axis and pivotable about a second axis, wherein electric motors that are in operative connection with the swivel head are comprised in particular for changing the position of the capturing region of the camera.

2. Device according to Claim 1, **characterized in that** the at least one camera parameter comprises a subregion of the image sensor of the camera that is to be selected.

3. Device according to Claim 1 or 2, **characterized in that**
the camera comprises a wide-angle lens with a diagonal angular field of between 60° and 270°, in particular between 60° and 180°, in particular a fisheye lens.

4. Device according to one of the preceding claims, **characterized in that**
the swivel head and/or the electric motors are arranged in a thermally insulating housing, in particular in a housing comprising at least one wall comprising at least one first thermally insulating layer and at least one second thermally insulating layer, wherein a vacuum is formed, or can be formed, between the first and second layers.

5. Device according to one of the preceding claims, **characterized in that**
the at least one camera is arranged in particular at or in the region of the front end and/or at or in the region of the rear end of the device.

6. Device according to one of the preceding claims, **characterized in that**
at least two cameras are comprised, the capturing regions of which are not arranged overlapping one another, or only partially overlapping one another, and the captured information of which is evaluated together by the electronic image processing device.

7. Device according to Claim 6, **characterized in that** the electronic image processing device calculates and displays the set display region on the basis of the captured information of all the cameras.

8. Device according to one of the preceding claims, **characterized in that**
the digitized data selected by the image processing device are subjected to a digital correction, in particular an elimination of distortion.

9. Device according to one of the preceding claims, **characterized in that**
the device is in operative connection, or can be brought into operative connection, with a display device, wherein the capturing region and/or the display region of the camera is displayed, or can be displayed, on the display device.

10. Use of a device according to one of the preceding claims in a lining sleeve and/or as a curing device for lining sleeves, in particular for curing the lining sleeve, preferably for curing the curable ply of the lining sleeve.

## Revendications

1. Dispositif pour durcir des revêtements intérieurs tubulaires imprégnés de résine au moyen d'un rayonnement riche en énergie, comprenant au moins une source de rayonnement pour générer un rayonnement riche en énergie pour durcir un revêtement intérieur tubulaire, au moins une caméra pour détecter une séquence d'images d'un environnement du dispositif et au moins un dispositif de saisie, en particulier situé de manière séparée du dispositif, dans lequel une zone de détection et/ou une zone d'affichage de la caméra peut être réglée ou est réglée par un utilisateur au moyen du dispositif de saisie, et dans lequel un réglage de la zone de détection de la caméra est effectué par un déplacement d'au moins une partie de la caméra et/ou au moyen d'un dispositif de traitement d'image électronique, conçu et configuré pour régler au moins un paramètre de caméra en fonction d'une zone d'affichage réglée, et dans lequel ladite au moins une caméra comprend une tête pivotante pouvant tourner autour d'un premier axe et pouvant pivoter autour d'un second axe, dans lequel des moteurs électriques fonctionnellement reliés à la tête pivotante sont notamment prévus pour modifier la position de la zone de détection de la caméra.

2. Dispositif selon la revendication 1, **caractérisé en ce que** ledit au moins un paramètre de caméra comprend une zone partielle devant être lue du capteur d'image de la caméra.

3. Dispositif selon la revendication 1 ou la revendication 2, **caractérisé en ce que** la caméra comprend un objectif grand angle présentant un angle de vue diagonal compris entre 60° et 270°, notamment entre 60° et 180°, notamment un objectif fisheye.

4. Dispositif selon l'une des revendications précédentes, **caractérisé en ce que** la tête pivotante et/ou les moteurs électriques sont disposés dans un boîtier thermiquement isolé, notamment dans un boîtier comprenant au moins une paroi comportant au moins une première couche thermiquement isolante et au moins une seconde couche thermiquement isolante, dans lequel un vide est formé ou peut être formé entre les première et seconde couches.

5. Dispositif selon l'une des revendications précédentes, **caractérisé en ce que** ladite au moins une caméra est notamment disposée sur ou dans la zone de l'extrémité avant et/ou sur ou dans la zone de l'extrémité arrière du dispositif.

6. Dispositif selon l'une des revendications précédentes, **caractérisé en ce qu'**il comprend au moins deux caméras dont les zones de détection ne se chevauchent pas ou se chevauchent seulement partiellement, et dont les informations détectées sont évaluées conjointement par le dispositif de traitement d'image électronique.

7. Dispositif selon la revendication 6, **caractérisé en ce que** le dispositif de traitement d'image électronique calcule et affiche la zone d'affichage réglée sur la base des informations détectées par toutes les caméras.

8. Dispositif selon l'une des revendications précédentes, **caractérisé en ce que** les données numérisées lues par le dispositif de traitement d'image sont soumises à une correction numérique, en particulier à une égalisation.

9. Dispositif selon l'une des revendications précédentes, **caractérisé en ce que** le dispositif est ou peut être mis en relation fonctionnelle avec un dispositif d'affichage, dans lequel la zone de détection et/ou la zone d'affichage de la caméra est affichée ou peut être affichée sur le dispositif d'affichage.

10. Utilisation d'un dispositif selon l'une des revendications précédentes dans un revêtement intérieur tubulaire et/ou en tant que dispositif de durcissement pour des revêtements intérieurs tubulaires, notamment pour le durcissement du revêtement intérieur tubulaire, de préférence pour le durcissement de la couche durcissable du revêtement intérieur tubulaire.
